# EUROPEAN PATENT APPLICATION

(11) **EP 4 517 491 A1**
(43) Date of publication of application: **05.03.2025**
(21) Application number: 24722099.9
(22) Date of filing: 12.04.2024
(51) Int. Cl.: G06F 3/01, G06F 3/00, G06F 3/04842, G06F 3/04845, G06F 3/04812, G06F 3/14

(54) **DISPLAY APPARATUS AND CONTROL METHOD THEREOF**

(30) Priority: 07.07.2023 KR 20230088688
(71) Applicant: Samsung Electronics Co., Ltd., Suwon-si, Gyeonggi-do 16677 (KR)
(72) Inventor: JEONG, Soonmook, Suwon-si, Gyeonggi-do 16677 (KR)
(74) Representative: Gulde & Partner
(86) International application number: PCT/KR2024/004945
(87) International publication number: WO 2025/014042

(57) **Abstract**

A display apparatus includes a display area in which an image is displayed; and a controller for determining a region of interest in the display area and controlling a size of the region of interest based on components of content displayed in the region of interest.

## Description

### [Technical Field]

The disclosure relates to a display apparatus.

### [Background Art]

In general, display apparatuses are a type of output devices for displaying obtained or stored electrical information for the user by converting the electrical information to visual information, and are used in various fields such as homes or work places.

There are many different display apparatuses such as monitor devices connected to personal computers (PCs) or server computers, portable computer systems, Global Positioning System (GPS) terminals, general television sets, Internet protocol televisions (IPTVs), portable terminals, e.g., smart phones, tablet PCs, personal digital assistants (PDAs), and cellular phones, any other display apparatus for reproducing images like advertisements or films, or other various kinds of audio/video systems.

The display apparatus includes a light source module to convert electrical information to visual information, and the light source module includes a plurality of light sources to separately emit light. Each of the plurality of light sources includes, for example, a light emitting diode (LED) or an organic LED (OLED).

Recently, the display apparatus is used to provide various contents.

The user may use the contents provided by the display apparatus through various input interfaces.

### [Disclosure]

### [Technical Problem]

The disclosure provides a display apparatus for determining a region of interest in a display area where an image is displayed.

The disclosure provides a display apparatus for controlling the size of the region of interest based on components of content in the region of interest.

The disclosure provides a display apparatus for controlling characteristics of a cursor in the region of interest.

Technological objectives of the disclosure are not limited to what are mentioned above, and throughout the specification, it will be clearly appreciated by those of ordinary skill in the art that there may be other technological objectives unmentioned.

### [Technical Solution]

According to an aspect of the disclosure, a display apparatus includes a display area in which an image is displayed; and a controller configured to determine a region of interest in the display area and control a size of the region of interest based on components of content displayed in the region of interest.

According to an aspect of the disclosure, a method of controlling a display apparatus includes determining a region of interest in a display area where an image is displayed and controlling a size of the region of interest based on components of content displayed in the region of interest.

### [Advantageous Effects]

According to the disclosure, a region of interest may be determined for a purpose of a user.

Furthermore, according to the disclosure, the size of the region of interest may be controlled to correspond to content.

Moreover, according to the disclosure, movement of a cursor may be controlled based on a size, number, spacing and/or type of components of the content in the region of interest.

According to the disclosure, the region of interest may be efficiently set up in the display apparatus to serve the purpose of the user.

### [Description of Drawings]

FIG. 1 illustrates a display apparatus, according to an embodiment.
FIG. 2 is an exploded view of a display apparatus, according to an embodiment.
FIG. 3 illustrates a display apparatus, according to another embodiment.
FIG. 4 is a control block diagram of a display apparatus, according to an embodiment.
FIG. 5 is a flowchart of a method of controlling a display apparatus, according to an embodiment.
FIG. 6 illustrates an example of determining a region of interest in a display area, according to an embodiment.
FIG. 7 illustrates an example of determining a region of interest in a display area, according to an embodiment.
FIG. 8 is a flowchart for describing an example of a method of determining a region of interest in the display area of FIG. 5, according to an embodiment.
FIG. 9 illustrates an example of determining a region of interest in a display area, according to an embodiment.
FIG. 10 illustrates an example of determining a region of interest in a display area, according to an embodiment.
FIG. 11 illustrates an example of controlling the size of a region of interest, according to an embodiment.
FIG. 12 is a flowchart for describing an example of a method of controlling the size of a region of interest based on components of contents displayed in the region of interest of FIG. 5, according to an embodiment.
FIG. 13 illustrates an example of controlling the size of a region of interest based on components of content displayed in the region of interest, according to an embodiment.
FIG. 14 illustrates an example of controlling the size of a region of interest based on components of content displayed in the region of interest, according to an embodiment.
FIG. 15 illustrates an example of controlling the size of a region of interest based on components of content displayed in the region of interest, according to an embodiment.
FIG. 16 is a flowchart for describing an example of a method of controlling the size of a region of interest based on components of content displayed in the region of interest of FIG. 5, according to an embodiment.
FIG. 17 illustrates an example of controlling the size of a region of interest based on components of content displayed in the region of interest, according to an embodiment.
FIG. 18 illustrates an example of controlling the size of a region of interest based on components of content displayed in the region of interest, according to an embodiment.
FIG. 19 illustrates an example of controlling the size of a region of interest based on components of content displayed in the region of interest, according to an embodiment.
FIG. 20 is a flowchart for describing an example of a method of determining characteristics of a cursor in the region of interest of FIG. 5, according to an embodiment.
FIG. 21 illustrates an example of determining characteristics of a cursor in a region of interest, according to an embodiment.
FIG. 22 illustrates an example of determining characteristics of a cursor in a region of interest, according to an embodiment.
FIG. 23 illustrates an example of determining characteristics of a cursor in a region of interest, according to an embodiment.

### [Modes of the Invention]

Embodiments and features as described and illustrated in the disclosure are merely examples, and there may be various modifications replacing the embodiments and drawings at the time of filing this application.

The terminology used herein is for the purpose of describing particular embodiments only and is not intended to limit the disclosure.

For example, the singular forms "a", "an" and "the" as herein used are intended to include the plural forms as well, unless the context clearly indicates otherwise.

Throughout the specification, "A or B", "at least one of A and B", "at least one of A or B", "A, B or C", "at least one of A, B and C", and "at least one of A, B, or C" may each include any one or all the possible combinations of A, B and C.

The expression "and/or" is interpreted to include a combination or any of associated elements.

Terms like "first", "second", etc., may be simply used to distinguish an element from another, without limiting the elements in a certain sense (e.g., in terms of importance or order).

When an element is mentioned as being "coupled" or "connected" to another element with or without an adverb "functionally" or "operatively", it means that the element may be connected to the other element directly (e.g., wiredly), wirelessly, or through a third element.

It will be further understood that the terms "comprise" and/or "comprising," when used in this specification, specify the presence of stated features, integers, steps, operations, elements, parts or combinations thereof, but do not preclude the possible presence or addition of one or more other features, integers, steps, operations, elements, components, and/or groups thereof.

When an element is mentioned as being "connected to", "coupled to", "supported on" or "contacting" another element, it includes not only a case that the elements are directly connected to, coupled to, supported on or contact each other but also a case that the elements are connected to, coupled to, supported on or contact each other through a third element.

Throughout the specification, when an element is mentioned as being located "on" another element, it implies not only that the element is abut on the other element but also that a third element exists between the two elements.

Furthermore, the terms, such as "~ part", "~ block", "~ member", "~ module", etc., may refer to a unit of handling at least one function or operation. For example, the terms may refer to at least one process handled by hardware such as a field-programmable gate array (FPGA)/application specific integrated circuit (ASIC), etc., software stored in a memory, or at least one processor.

A display apparatus according to various embodiments will now be described in detail in connection with the accompanying drawings.

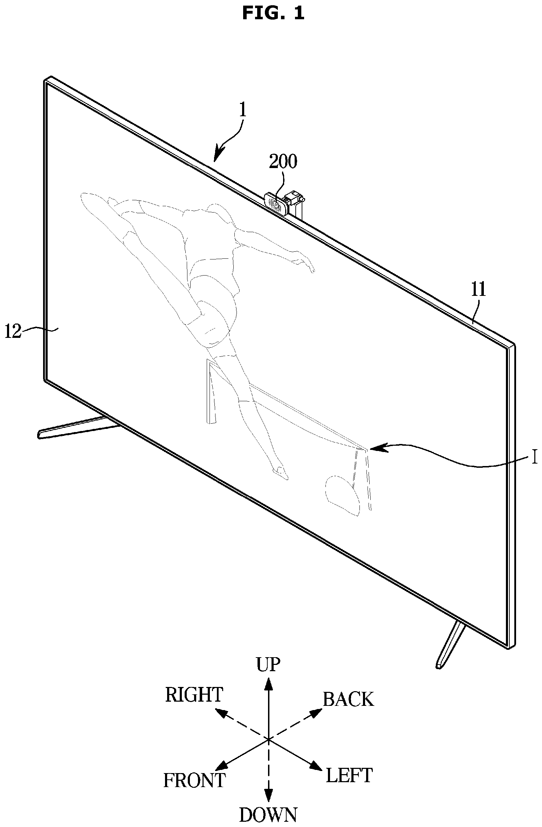

FIG. 1 illustrates a display apparatus, according to an embodiment.

A display apparatus 1 is a device that is able to process image signals received from the outside and visually present the processed image. In the following description, it is assumed that the display apparatus 1 is a television (TV), but embodiments of the disclosure are not limited thereto. For example, the display apparatus 1 may be implemented in various forms, such as a monitor, a portable multimedia device, a portable communication device, and any device capable of visually presenting images, without being limited thereto.

The display apparatus 1 may be a large format display (LFD) installed outdoors such as on a rooftop of a building or at a bus stop. The display apparatus 1 is not, however, exclusively installed outdoors, but may be installed at any place, even indoors with a lot of foot traffic, e.g., at subway stations, shopping malls, theaters, offices, stores, etc.

As shown in. 1, the display apparatus 1 may include a main body 11 and/or a display area 12 in which an image I is displayed.

The main body 11 forms the exterior of the display apparatus 1, and components for the display apparatus 1 to display the image I or perform many different functions may be included in the main body 11. Although the main body 11 of FIG. 1 is shaped like a flat plate, it is not limited thereto. For example, the main body 11 may have the form of a curved plate.

The display area 12 may be formed on the front of the main body 11 for displaying the image I. For example, the display area 12 may display still images or moving images. Furthermore, the display area 12 may display two dimensional (2D) plane images, or three dimensional (3D) stereographic images using parallax of both eyes of the user.

The display area 12 may include, for example, a self-luminous panel (e.g., a light emitting diode (LED) panel or an organic LED (OLED) panel) capable of emitting light at first hand, or nonluminous panel (e.g., a liquid crystal panel) capable of passing or blocking light emitted from e.g., a light source device (e.g., a backlight unit).

As shown in FIG. 1, the display apparatus 1 may include a sensor module 200.

The sensor module 200 may be placed on the main body 11. The sensor module 200 may be arranged on the main body 11 to be able to turn to the left and/or right. The sensor module 200 may be arranged on the main body 11 to be adjusted in height.

Alternatively, the sensor module 200 may be arranged inside the display apparatus 1. The sensor module 200 may be connected to the display apparatus 1 wiredly (e.g., by universal serial bus (USB) connection or high definition multimedia interface (HDMI)) or wirelessly (e.g., by wireless fidelity (Wi-Fi) or bluetooth connection).

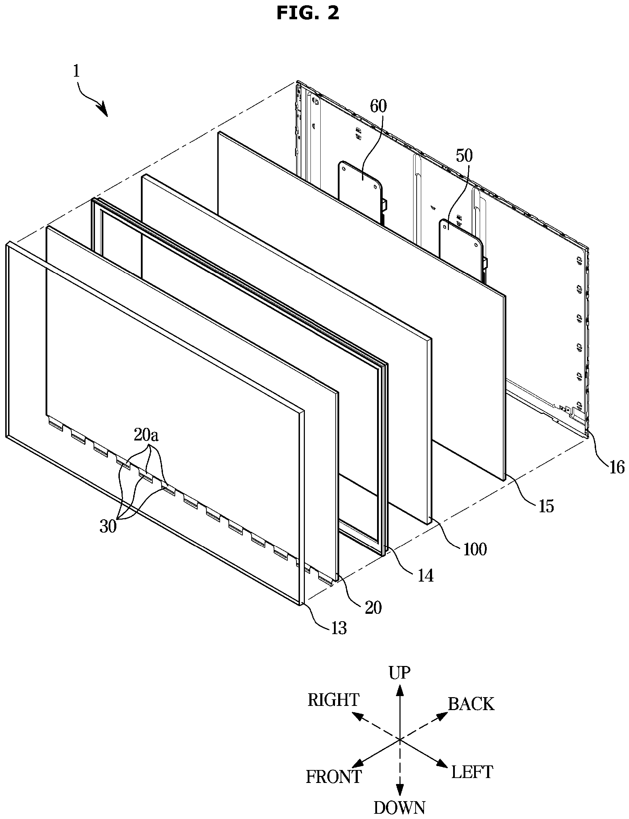

FIG. 2 is an exploded view of a display apparatus, according to an embodiment. As shown in FIG. 2, the main body 11 may contain many different kinds of components to create the image I in the display area 12.

For example, a light source device 100, which is a surface light source, a liquid crystal panel 20 for blocking or passing the light emitted from the light source device 100, a control assembly 50 for controlling operations of the light source device 100 and/or the liquid crystal panel 20, or a power assembly 60 for supplying power to the light source device 100 and/or the liquid crystal panel 20 are equipped in the main body 11. Furthermore, the main body 11 may include a bezel 13, a frame middle mold 14, a bottom chassis 15, and a rear cover 16 to support and secure the liquid crystal panel 20, the light source device 100, the control assembly 50, and/or the power assembly 60.

The light source device 100 may include a point light source for emitting monochromatic light or white light, and refract, reflect, and/or scatter the light emitted from the point light source to convert the light to uniform surface light. In this way, the light source device 100 may emit the uniform surface light in a forward direction by refracting, reflecting and/or scattering the light emitted from the point light source.

The liquid crystal panel 20 may be arranged in front of the light source device 100 for blocking or passing the light emitted from the light source device 100 to produce the image I.

The front face of the liquid crystal panel 20 may constitute the aforementioned display area 12 of the display device 1.

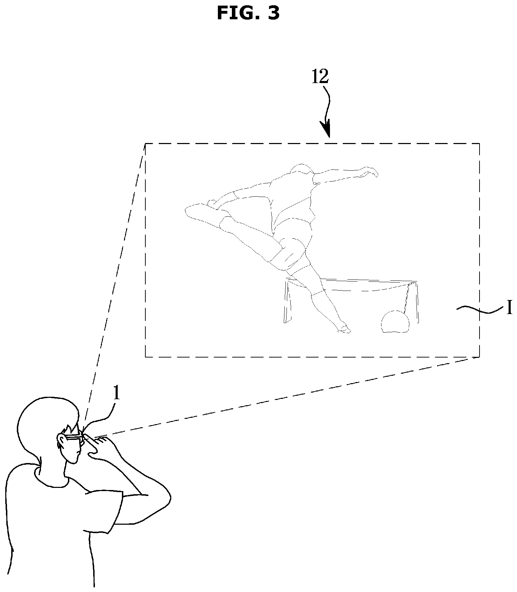

FIG. 3 illustrates a display apparatus, according to another embodiment.

Referring to FIG. 3, the display apparatus 1 may be an apparatus for outputting at least one of virtual reality (VR), augmented reality (AR), extended reality (XR), mixed reality (MR) or substitutional reality (SR) in the display area 12.

For example, the display apparatus 1 may include a head mounted device (HMD), smart glasses, an AR headset, VR glasses, or the like.

The display area 12 in the apparatus for outputting the at least one of VR, AR, XR, MR or SR into the display area 12 refers to an area in which an image is displayed.

The display apparatus as shown in FIG. 3 is an example of the display apparatus as described above in connection with FIG. 1.

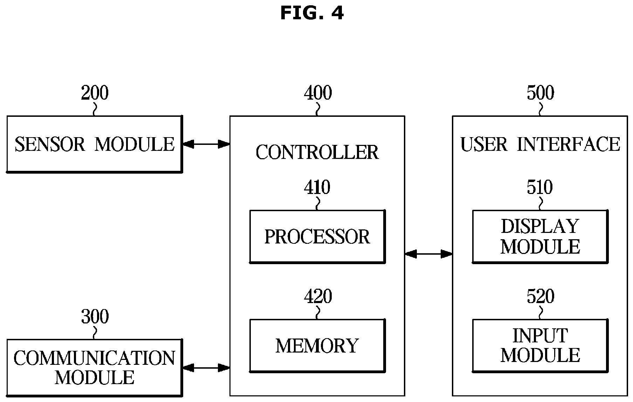

FIG. 4 is a control block diagram of a display apparatus, according to an embodiment.

Referring to FIG. 4, the display apparatus 1 may include the sensor module 200, a communication module 300, a controller 400 and/or a user interface 500.

The sensor module 200 may include a camera. The camera may have a certain capturing area and obtain an image of the certain capturing area. For example, the camera may obtain an image of a user by capturing the user in the certain capturing area. The camera may refer to any component capable of obtaining an image of the user. For example, the camera may include a red green blue (RGB) camera, an infrared (IR) camera, an optical flow camera, a stereo camera and/or a depth sensing camera.

The sensor module 200 may refer to any component capable of obtaining information relating to the user's view and/or movement. For example, the sensor module 200 may include an IR sensor, an ultrasound sensor, an accelerometer and gyroscope sensor, an optical sensor and/or a depth sensor.

The information relating to the user's view and/or movement may be, for example, image information.

When the display apparatus 1 is an apparatus for displaying the VR, AR, XR, MR or SR in the display area 12, the information relating to the user's view and/or movement may be acceleration information and/or inertial information of the display apparatus 1.

In various embodiments, the sensor module 200 may automatically control the exposure value based on an amount of surrounding light. The exposure value may include set values for shutter speed, aperture and/or ISO sensitivity. In an embodiment, the sensor module 200 may reduce the exposure value when the surroundings are brighter and increase the exposure value when the surroundings are darker.

For example, the sensor module 200 may set the exposure value to a preset value or less outdoors in the sunlight, and set the exposure value to a value greater than the preset value indoors darker than the outdoors.

The sensor module 200 may operate based on a control signal from the controller 400 and send sensor information relating to the user's view and/or movement.

The controller 400 may include at least one memory 420 for storing a program for carrying out the aforementioned and following operations, and at least one processor 410 for executing the stored program.

The controller 400 may be electrically connected to the sensor module 200, the communication module 300, the user interface 500 and/or various components equipped in the display apparatus 1 to control the sensor module 200, the communication module 300, the user interface 500 and/or the various components equipped in the display apparatus 1.

When the controller 400 includes a plurality of memories 420 and a plurality of processors 410, the plurality of memories 420 and the plurality of processors 410 may be integrated in a single chip or may be physically separated.

The controller 400 may perform various functions based on the information received from the sensor module 200.

For example, the controller 400 may turn the sensor module 200 based on an image of the user received from the sensor module 200 to adjust a field of view of the sensor module 200.

In another example, the controller 400 may identify the user's position, view and/or movement based on the information received from the sensor module 200.

In another example, the controller 400 may create the cursor 40 in the display area 12 or control movement of the cursor 40 based on the user's movement (e.g., gesture).

In an embodiment, the controller 400 may turn on or off the sensor module 200 based on a certain condition being satisfied.

For example, the controller 400 may turn on the sensor module 200 based on the display apparatus 1 being powered on. In another example, the controller 400 may turn on the sensor module 200 based on a certain user interface being provided by the display apparatus 1.

In an embodiment, the controller 400 may control a display module 510 to output the image I that includes content.

The content may be at least one image, at least one video, at least one graphic user interface (GUI) (a button, an icon, a dialog box, a menu tab, a menu bar, a virtual keyboard, a page in page (PIP), at least one hyperlink and/or a combination thereof.

In an embodiment, the controller 400 may control the display module 510 based on a user input signal transmitted from the communication module 300 and/or an input module 520.

For example, the controller 400 may create the cursor 40 in the display area 12 or control movement of the cursor 40 based on the user input signal transmitted from the communication module 300 and/or the input module 520.

The user interface 500 may include the display module 510 for displaying the image I in the display area 12 and the input module 520 for receiving various user inputs.

The display module 510 may include at least one display. The at least one display may be an LED panel, an OLED panel, a liquid crystal display (LCD) panel and/or an indicator. Furthermore, the display module 510 may include a touch screen.

The display module 510 may include the display area 12 in which the image I is displayed.

The display area 12 may include a screen arranged on the display apparatus 1 and/or a virtual screen output from the display apparatus 1.

**In** an embodiment, the display module 510 may output the image I corresponding to content data created based on the user input signal transmitted from the communication module 300 and/or the input module 520.

For example, when the content in the image I is at least one image, the display module 510 may output a still image of a selected region among the at least one image based on the user input signal transmitted from the communication module 300 and/or the input module 520.

**In** another example, when the content in the image I is text, the display module 510 may output some of a plurality of characters included in the text based on the user input signal transmitted from the communication module 300 and/or the input module 520.

The input module 520 may include buttons (e.g., push buttons or touch buttons), a dial, a touch pad, a touch screen and/or a microphone arranged in various locations on the display apparatus 1.

The input module 520 may receive a user input for controlling the image I output on the display module 510.

The communication module 300 may include at least one of a short-range communication module or a long-range communication module.

The communication module 300 may transmit data to an external device or receive data from the external device. For example, the communication module 300 may establish communication with a server, an external device (e.g., a keyboard, a mouse, a remote controller, a touch screen, a touch pad, a VR controller, or a user equipment) and/or another home appliance to transmit and receive various data.

The user equipment may include a personal computer, a terminal, a mobile phone, a smart phone, a handheld device, a wearable device, a display device, etc., without being limited thereto.

For this, the communication module 300 may support establishment of a direct (e.g., wired) communication channel or a wireless communication channel between external devices, and communication through the established communication channel. in an embodiment, the communication module 300 may include a wireless communication module (e.g., a cellular communication module, a short-range wireless communication module or a global navigation satellite system (GNSS) communication module) or a wired communication module (e.g., a local area network (LAN) communication module or a power-line communication module). A corresponding one of the communication modules may communicate with an external device over a first network (e.g., a short-range communication network such as bluetooth, wireless-fidelity (Wi-Fi) direct or infrared data association (IrDA)) or a second network (e.g., a remote communication network such as a legacy cellular network, a fifth generation (5G) network, a next generation communication network, the Internet, or a computer network (e.g., a LAN or wide area network (WAN)). These various types of communication modules may be integrated into a single component (e.g., a single chip) or implemented as a plurality of separate components (e.g., a plurality of chips).

The short-range communication module may include a bluetooth communication module, a bluetooth low energy (BLE) communication module, a near field communication (NFC) module, a WLAN, e.g., Wi-Fi, communication module, a Zigbee communication module, an infrared data association (IrDA) communication module, a Wi-Fi direct (WFD) communication module, an ultrawideband (UWB) communication module, an Ant+ communication module, a microwave (uWave) communication module, etc., without being limited thereto.

The IrDA communication module may transmit and receive various data with an external device and/or another home appliance based on an IrDA signal generated by the external device and/or the other home appliance.

For example, the IrDA communication module may receive a control signal output from a remote controller. The control signal may include a command to control power on/off of the display apparatus 1, a command to control movement and/or selection of the cursor in the display area 12 and/or a command to input a character to the display area 12.

The IrDA communication module may include a photo diode. The photo diode may receive an IrDA signal generated from the external device and/or the other home appliance.

The long-range communication module may include a communication module for performing various types of long-range communication and include a mobile communication module. The mobile communication module may transmit and receive wireless signals to and from at least one of a base station, an external terminal or a server over a mobile communication network.

In an embodiment, the communication module 300 may communicate with an external device such as a server, a user equipment, another home appliance, etc., through a nearby access point (AP).

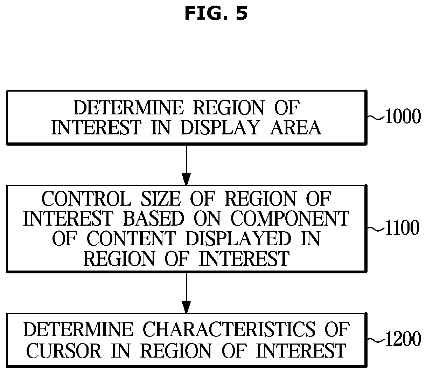

FIG. 5 is a flowchart of a method of controlling a display apparatus, according to an embodiment.

Referring to FIG. 5, the display apparatus 1 may determine a region of interest 320 in the display area 12 where the image I is displayed, in 1000.

In an embodiment, the display apparatus 1 may determine the region of interest 320 based on at least one of a layout of the image I, a behavior pattern of the user or a user database.

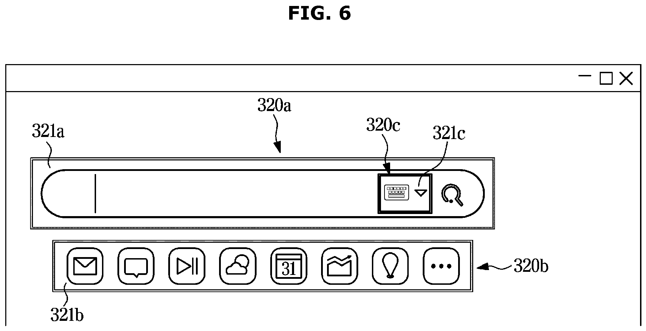

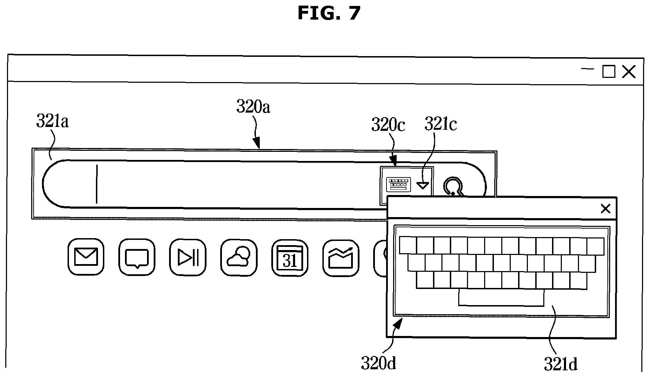

FIGS. 6 and 7 illustrate an example of determining the region of interest 320 in a display area, according to an embodiment.

Referring to FIG. 6, in an embodiment, the controller 400 may determine the region of interest 320 (320a, 320b and/or 320c) based on a layout of the image I. The layout of the image I refers to an area divided by components in the image I which are visually distinguished by the user.

For example, the controller 400 may divide the image I into a search window 321a and a category window 321b, and determine an area corresponding to at least one of the search window 321a or the category window 321b as the region of interest 320 (320a and/or 320b).

In an embodiment, the controller 400 may determine a largest region among the layout of the image I as the region of interest 320 (320a, 320b and/or 320c).

For example, the controller 400 may divide the image I into the search window 321a and the category window 321b, and determine the largest of the areas corresponding to the search window 321a and the category window 321b as the region of interest 320 (320a or 320b).

**In** various embodiments, the controller 400 may determine a plurality of regions of interest 320 (320a, 320b and/or 320c).

**In** an embodiment, when there is a selectable element (e.g., a GUI, hyperlink, etc.) in the determined region of interest 320a, the controller 400 may determine a region corresponding to the element as an additional region of interest.

For example, the controller 400 may determine a region corresponding to the search window 321a as the region of interest 320a, and when there is a selectable input tool window 321c in the region of interest 320a, may determine a region corresponding to the input tool window 321c as the region of interest 320c.

**In** an embodiment, the controller 400 may determine a region corresponding to a selectable element as the region of interest 320c, and determine a region corresponding to the layout of the image I displayed based on a user input signal to select the selectable element as an additional region of interest 320d.

For example, referring to FIG. 7, the controller 400 may determine a region corresponding to the selectable input tool window 321c as the region of interest 320c, and determine a region corresponding to a keyboard window 321d displayed based on a user input signal to select the input tool window 321c as the additional region of interest 320d.

In an embodiment, the controller 400 may determine a region corresponding to a selectable element in the determined region of interest 320a and a region corresponding to the layout of the image I displayed based on the user input signal to select the element as additional regions of interest 320 (320c and 320d).

For example, the controller 400 may determine a region corresponding to the search window 321a as the region of interest 320a, and determine a region corresponding to the selectable input tool window 321c in the region of interest 320a and a region corresponding to the keyboard window 321d displayed based on the user input signal to select the input tool window 321c as additional regions of interest 320 (320c and 320d).

The example in which the controller 400 determines the plurality of regions of interest 320 is not limited thereto, and other various examples in which the controller 400 determines the plurality of regions of interest 320 in the image I may be used in the disclosure.

For example, the controller 400 may determine a region corresponding to a selectable menu tab in the image I and a region corresponding to the layout (e.g., a bottom menu tab) of the image I displayed based on a user input signal to select the menu tab as the regions of interest 320.

Referring to FIG. 6, in various embodiments, the display apparatus 1 may determine the region of interest 320 (320a, 320b and/or 320c) based on a behavior pattern of the user.

In an embodiment, the controller 400 may determine a region corresponding to the user's view with a high frequency in the image I based on the user's image as the region of interest 320 (320a, 320b and/or 320c).

In an embodiment, the controller 400 may determine a region corresponding to the user's view with a high frequency among the search window 321a and the category window 321b as the region of interest 320a and 320b.

In an embodiment, the controller 400 may determine the region of interest 320 (320a, 320b and/or 320c) based on a user input signal.

For example, the controller 400 may determine the region of interest 320 (320a, 320b and/or 320c) based on a frequency of selecting the selectable element based on the user input signal.

For example, the controller 400 may determine the region of interest 320 (320b and/or 320c) to be an area including an element selected at a high frequency based on the user input signal among the selectable category window 321b and/or the input tool window 321c.

In various embodiments, the display apparatus 1 may determine the region of interest 320 (320a, 320b and/or 320c) based on a user database. The user database may include structured data, unstructured data and/or big data.

In an embodiment, the controller 400 may determine the region of interest 320 (320a, 320b and/or 320c) based on a log of use of another display apparatus received from an external device.

For example, the controller 400 may determine a region corresponding to the user's view with a high frequency in an image on the other display apparatus as the region of interest 320 (320a, 320b and/or 320c).

For example, the controller 400 may determine a region corresponding to the user's view with a high frequency among the search window 321a and the category window 321b displayed in the image on the other display apparatus as the region of interest 320a and 320b.

In an embodiment, the controller 400 may determine the region of interest 320 (320a, 320b and/or 320c) based on a user input signal transmitted to the other display apparatus.

For example, the controller 400 may determine the region of interest 320 (320a, 320b and/or 320c) based on a frequency of selecting a selectable element in the image based on the user input signal transmitted to the other display apparatus.

For example, the controller 400 may determine the region of interest 320 (320b and/or 320c) to be a region including an element selected at a high frequency based on the user input signal transmitted to the other display apparatus from among the selectable category window 321b and/or the input tool window 321c.

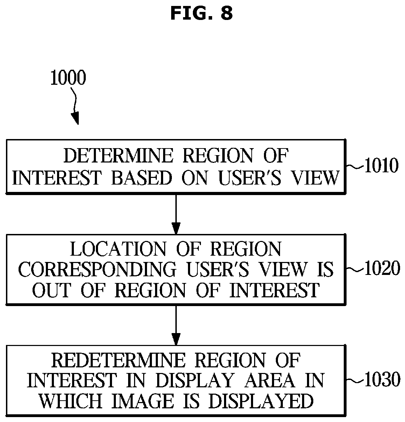

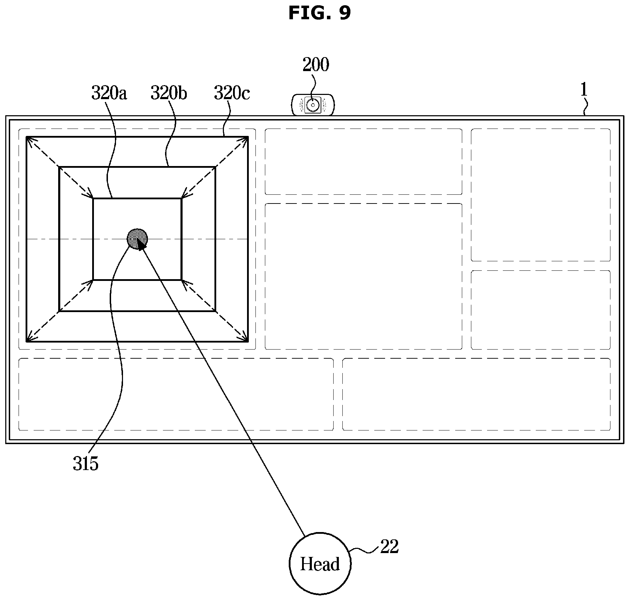

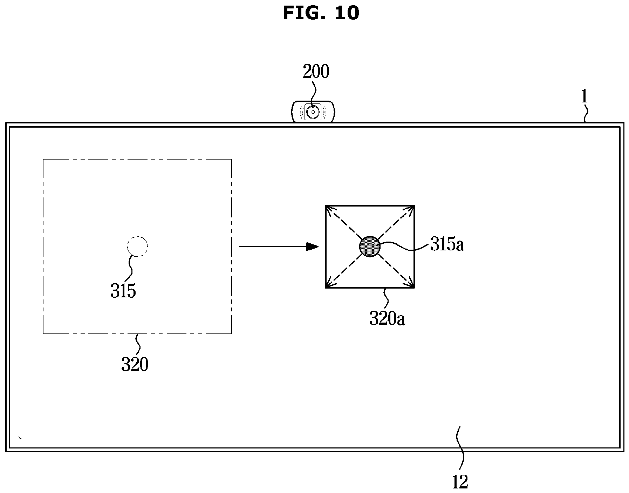

FIG. 8 is a flowchart for describing an example of a method of determining a region of interest in the display area of FIG. 5, according to an embodiment. FIGS. 9 and 10 illustrate an example of determining a region of interest in a display area, according to an embodiment.

Referring to FIG. 8, the display apparatus 1 may determine the region of interest 320 based on the user's view, in 1010.

Referring to FIG. 9, in an embodiment, the sensor module 200 may obtain information (e.g., an image) relating to a user 22.

In an embodiment, the controller 400 may determine a point of interest 315 corresponding to the view of the user 22 in the display area 12 based on the sensor information obtained by the sensor module 200.

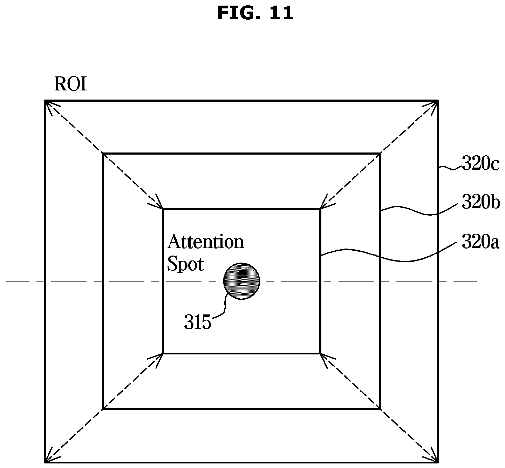

In an embodiment, the controller 400 may determine the region of interest 320 of a certain size including the determined point of interest. The size of the region of interest 320a, 320b and 320c may be expanded or reduced. This will be described in detail in connection with FIG. 11.

Referring to FIG. 8, based on the location of a region corresponding to the user's view being out of the region of interest in 1020, the display apparatus 1 may redetermine a region of interest in the display area 12 in which an image is displayed in 1030.

Referring to FIG. 10, in an embodiment, the controller 400 may update a region of interest 315a corresponding to the view of the user 22 in the display area 12 in real time based on sensor information obtained by the sensor module 200. Based on the location of the point of interest 315a corresponding to the user's view being out of the region of interest 320, the controller 400 may redetermine the region of interest 320 to be the region 320a of a certain size including the point of interest 315a that is out of the region of interest 320.

In an embodiment, the controller 400 may update the point of interest 315a corresponding to the view of the user 22 in the display area 12 in real time based on the sensor information obtained by the sensor module 200. Based on the location of the point of interest 315a corresponding to the user's view being a certain distance away from a boundary of the determined region of interest 320, the controller 400 may redetermine the region of interest 320 to be the region 320a of a certain size including the point of interest 315a that is out of the region of interest 320.

The certain distance may be a distance corresponding to 20% of horizontal and/or vertical length of the region of interest 320 from the boundary of the region of interest 320 and/or a distance set by the user.

FIG. 11 illustrates an example of controlling the size of a region of interest, according to an embodiment.

Referring to FIG. 11, in an embodiment, the controller 400 may determine a region of a certain size including the point of interest 315 in the display area 12 as the region of interest 320a. The region of interest 320a may be shaped like a rectangle, a circle, an oval and/or may be a region that occupies an area.

The certain size may be different depending on various embodiments.

For example, the controller 400 may determine the region of interest 320 based on a size set by the user.

In various embodiments, the controller 400 may expand and/or reduce the region of interest 320 having the certain size.

In an embodiment, the controller 400 may sequentially or continuously expand and/or reduce the region of interest 320 having the certain size.

For example, the controller 400 may expand the region of interest corresponding to the first region 320a to a region corresponding to the second region 320b, and further expand the region of interest to a region corresponding to the third region 320c larger than the second region 320b.

In another example, the controller 400 may reduce the region of interest 320c corresponding to the third region 320c to a region corresponding to the second region 320b, and further reduce the region of interest to a region corresponding to the first region 320a smaller than the second region 320b.

In an embodiment, the controller 400 may expand and/or reduce the region of interest 320 based on a certain expansion and/or reduction ratio. The expansion and/or reduction ratio may be a value obtained by dividing an area of the region of interest 320 after expansion and/or reduction by an area of the region of interest 320 before expansion and/or reduction.

For example, the controller 400 may expand the region of interest corresponding to the first region 320a to a region corresponding to the second region 320b corresponding to an area obtained by multiplying the area of the region of interest corresponding to the first region 320a by a first expansion ratio, or expand the region of interest to a region corresponding to the third region 320c corresponding to an area obtained by multiplying the area of the region of interest corresponding to the first region 320a by a second expansion ratio. The second expansion ratio may be larger than the first expansion ratio, and the first and second expansion ratios may be stored in the memory 420 in advance as certain values.

In another example, the controller 400 may reduce the region of interest corresponding to the third region 320c to a region corresponding to the second region 320b corresponding to an area obtained by multiplying the area of the region of interest corresponding to the third region 320c by a first reduction ratio, or reduce the region of interest to an area corresponding to the first region 320a corresponding to an area obtained by multiplying the area of the region of interest corresponding to the third region 320c by a second reduction ratio. The second reduction ratio may be larger than the first reduction ratio, and the first and second reduction ratios may be stored in the memory 420 in advance as certain values.

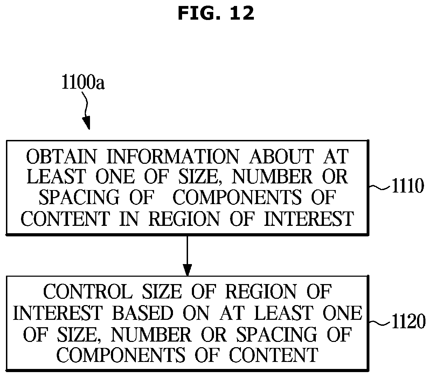

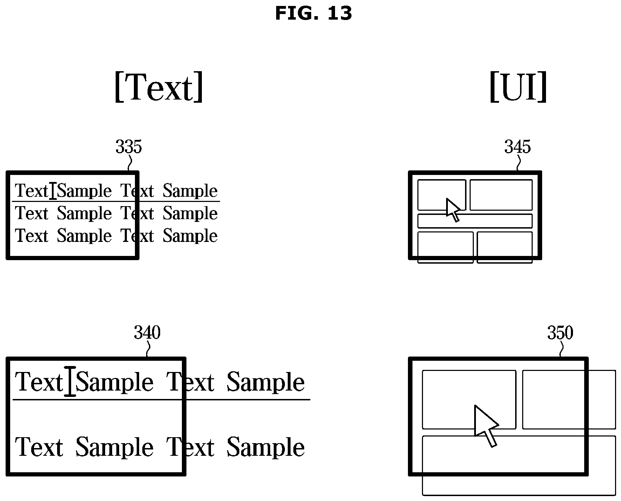

FIG. 12 is a flowchart 1100a for describing an example of a method of controlling the size of a region of interest based on components of content displayed in the region of interest of FIG. 5, according to an embodiment. FIGS. 13 to 15 illustrate an example of controlling the size of a region of interest based on components of content displayed in the region of interest, according to an embodiment.

Referring to FIG. 12, the display apparatus 1 may obtain information about at least one of the size, spacing or number of components of content in the region of interest, in 1110.

The components of content are any components that may be visually recognized by the user such as characters, images, videos, GUIs, hyperlinks, etc.

For example, when the content is text, the components of the content may be characters (e.g., alphabets); when the content is at least one image, the components of the content may be images; when the content is at least one video, the components of the content may be videos; when the content is at least one GUI, the components of the content may be GUIs. When the content may be at least one hyperlink, the components of the content may be hyperlinks.

The display apparatus 1 may control the size of the region of interest based on at least one of the size, spacing or number of components of the content in the region of interest 320, in 1120.

Referring to FIG. 13, in various embodiments, the controller 400 may control the size of the region of interest 320 (335 and 340) based on the size and/or spacing of the components of the content in the region of interest 320 (335 and 340).

In an embodiment, when the components of the content in the region of interest 320 is text, the controller 400 may control the size of the region of interest 320 (335 and 340) based on the size of the character and/or the spacing between the characters.

For example, when the components of the content in the region of interest 320 (335 and 340) is text, the controller 400 may control the size of the region of interest 320 (335 and 340) in proportion to the size of the character and/or the spacing between the characters.

In another example, the controller 400 may control the size of the region of interest 335 having characters in relatively small size or having relatively narrow spacing between the characters to be smaller than the size of the region of interest 340 having characters in relatively large or having relatively wide spacing between the characters.

In an embodiment, when the components of the content in the region of interest 320 (345 and 350) are images and/or videos, the controller 400 may control the size of the region of interest 320 (345 and 350) based on the size and/or spacing of the images and/or videos.

For example, when the components of the content in the region of interest 320 (345 and 350) are images and/or videos, the controller 400 may control the size of the region of interest 320 (345 and 350) in proportion to the size of the image and/or the video or the spacing between the images and/or the videos.

In another example, the controller 400 may control the size of the region of interest 345 having images and/or videos in relatively small size or having relatively narrow spacing between the images and/or videos to be smaller than the size of the region of interest 345 having images and/or videos in relatively large size or having relatively wide spacing between the images and/or videos.

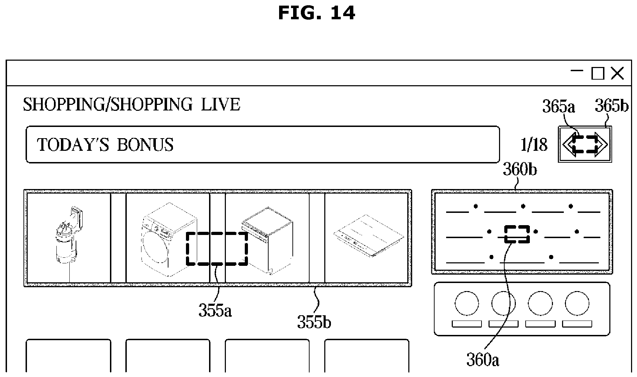

Referring to FIG. 14, in an embodiment, based on the number of components of content in the region of interest 320 (355a, 360a and 365a) having a certain size, the controller 400 may expand the size of the region of interest.

In an embodiment, when the components of the content in the region of interest 355a having a certain size are images and/or videos, the controller 400 may expand the size of the region of interest based on the number of images and/or videos in the region of interest 355a having the certain size.

For example, when the components of the content in the region of interest 355a having the certain size are images and/or videos, the controller 400 may expand the region of interest 355a to have a size that expands in inverse proportion to the number of images and/or videos.

In an embodiment, when the components of the content in the region of interest 365a having a certain size are GUIs (e.g., buttons), the controller 400 may expand the size of the region of interest based on the number of GUIs (e.g., buttons) in the region of interest 365a having the certain size.

For example, when the components of the content in the region of interest 365a having a certain size are GUIs (e.g., buttons), the controller 400 may expand the region of interest 365a to be the region of interest 365b having a size resulting from expanding in inverse proportion to the number of GUIs (e.g., buttons) in the region of interest 365a having the certain size.

In an embodiment, the controller 400 may determine the certain size of the region of interest 320 (355a, 360a or 365a) based on the type of the components of the content.

For example, the controller 400 may determine the certain size of the region of interest 355a including a region where the image and/or video is displayed to be larger than the certain size of the region of interest 360a including a region where characters are displayed.

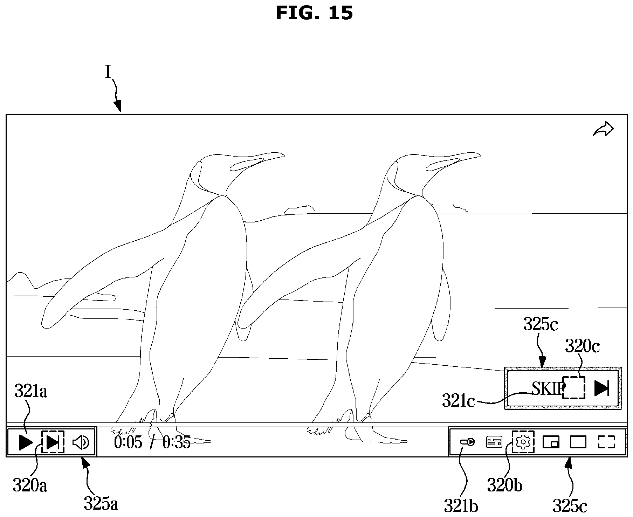

Referring to FIG. 15, in an embodiment, the controller 400 may determine regions 325a, 325b and 325c corresponding to certain contents in the image I as the regions of interest 320.

For example, referring to FIG. 15, when contents, i.e., a video, a first GUI set 321a, a second GUI set 321b and/or a third GUI 321c, are displayed in the image I, the controller 400 may determine the regions 325a, 325b and 325c corresponding to the respective contents as the regions of interest 320.

The regions corresponding to the contents in the image I are not limited thereto, but may correspond to regions corresponding to text, at least one image, at least one video, at least one GUI (e.g., buttons, icons, a dialog box, a menu tab, a menu bar, a virtual keyboard, page in page (PIP), an advertisement banner, etc.), at least one hyperlink and/or a combination thereof.

In an embodiment, the controller 400 may determine the regions 320a, 320b and 320c corresponding to components of content in the image I as the regions of interest 320, and expand the size of the regions of interest 320 to be regions corresponding to the contents in the image I.

For example, the controller 400 may determine a region corresponding to at least one of the region 320a corresponding to the first GUI, the region 320b corresponding to the second GUI or the region 320c corresponding to the third GUI as the region of interest, and expand the region of interest 320 to be the regions 325a, 325b and 325c corresponding to the respective contents.

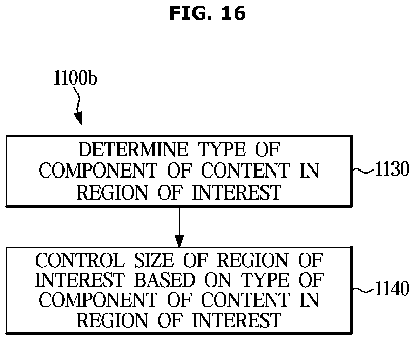

FIG. 16 is a flowchart 1100b for describing an example of a method of controlling the size of a region of interest based on components of content displayed in the region of interest of FIG. 5, according to an embodiment.

The display apparatus 1 may determine a type of the components of the content in the region of interest, in 1130.

The type of the components of the content may include text, image, video, GUI and/or hyperlink.

When the content is text, respective characters (e.g., alphabets) are the same type of components of the content. When the content is at least one image, the respective images are the same type of components of the content. When the content is at least one video, the respective videos are the same type of components of the content. When the content is at least one GUI, the respective GUIs are the same type of components of the content. When the content is at least one hyperlink, the respective hyperlinks are the same type of components of the content.

The display apparatus 1 may control the size of the region of interest based on the type of the components of the content in the region of interest.

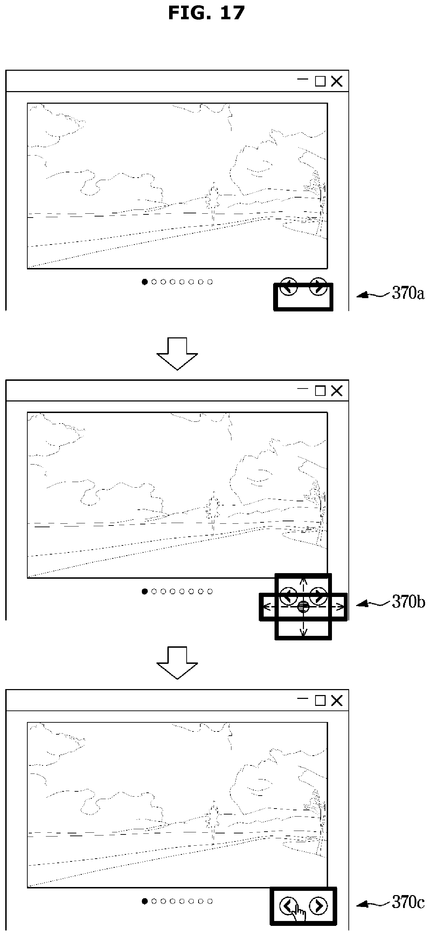

FIGS. 17 to 19 illustrate an example of controlling the size of a region of interest based on components of content displayed in the region of interest, according to an embodiment.

In various embodiments, based on the type of the components of content in the region of interest 320 identified as a first type, the controller 400 may expand and/or reduce the region of interest 320 to a region having the first type of components of the content.

Referring to FIG. 17, when the components of content in a region of interest 370a having a certain size are GUIs (e.g., buttons), the controller 400 may expand the region of interest 370a to include a region corresponding to at least one GUI (e.g., button).

For example, when components of the content in the region of interest 370a having the certain size are GUIs (e.g., buttons), the controller 400 may expand the size of the region of interest 370a having the certain size to up/down/left/right directions at the same time, and when at least one GUI (e.g., a button) is included in an expanded region of interest 370b, the controller 400 may determine a region corresponding to the at least one GUI (e.g., button) as a region of interest 370c.

In another example, when components of the content in the region of interest 370a having the certain size are GUIs (e.g., buttons), the controller 400 may expand the size of the region of interest 370a having the certain size to up, down, left and/or right direction in sequence, and when at least one GUI (e.g., a button) is included in the expanded region of interest 370b, the controller 400 may determine a region corresponding to the at least one GUI (e.g., button) as the region of interest 370c.

In an embodiment, when the components of the content in the region of interest 370a having the certain size are GUIs (e.g., buttons), the controller 400 may expand the region of interest 370a sequentially and expand the region of interest until no additional GUI (e.g., button) is detected in the region of interest.

For example, when components of the content in the region of interest 370a having the certain size are GUIs (e.g., buttons), the controller 400 may expand the size of the region of interest 370a having the certain size, and determine a region corresponding to a GUI (e.g., button) included in the expanded region of interest 370b as the region of interest 370c based on no additional GUI (e.g., button) detected in the expanded region of interest 370b.

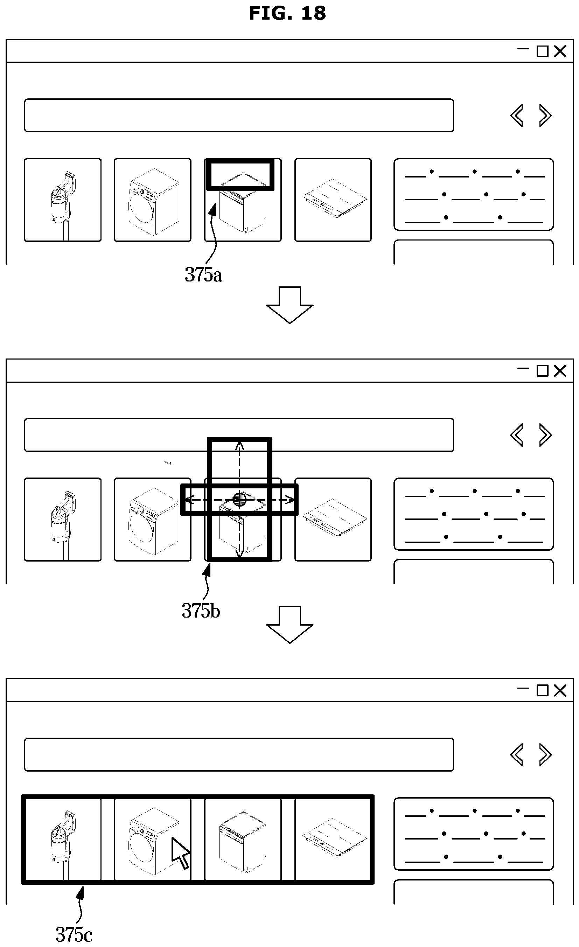

Referring to FIG. 18, in an embodiment, when components of the content in a region of interest 375a having a certain size are images and/or videos, the controller 400 may expand the region of interest 375a to include a region corresponding to at least one image and/or video.

For example, when the components of the content in the region of interest 375a having the certain size are images and/or videos, the controller 400 may expand the size of the region of interest 375a having the certain size to up/down/left/right directions at the same time, and when at least one image and/or video is included in an expanded region of interest 375b, the controller 400 may determine a region corresponding to the at least one image and/or video as a region of interest 375c.

In another example, when the components of the content in the region of interest 375a having the certain size are images and/or videos, the controller 400 may expand the size of the region of interest 375a having the certain size to up, down, left and/or right direction in sequence, and when at least one image and/or video is included in the expanded region of interest 375b, the controller 400 may determine a region corresponding to the at least one image and/or video as the region of interest 375c.

In an embodiment, when the components of the content in the region of interest 375a having the certain size are images and/or videos, the controller 400 may expand the region of interest 375a sequentially and expand the region of interest until no additional image and/or video is detected in the region of interest.

For example, when components of the content in the region of interest 375a having the certain size are images and/or videos, the controller 400 may expand the size of the region of interest 375a having the certain size, and based on an additional image and/or video detected in the expanded region of interest 375b, further expand the region of interest to the region of interest 375c where no additional image and/or video is detected.

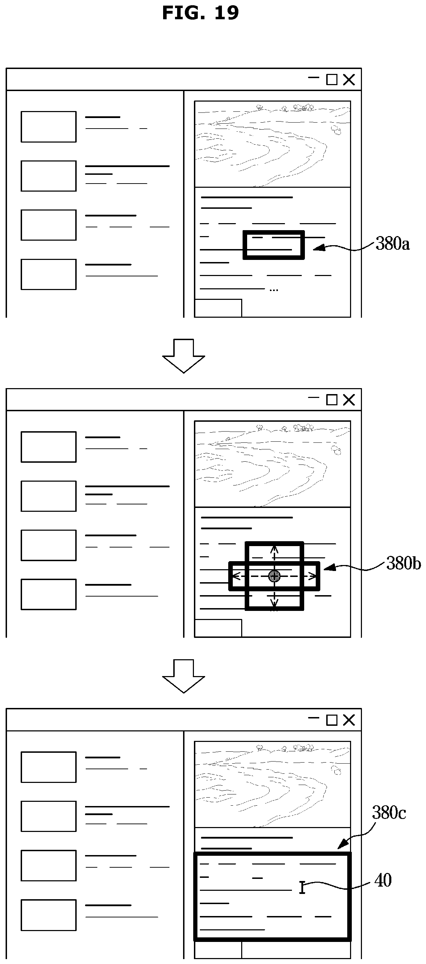

Referring to FIG. 19, in an embodiment, when components of content in a region of interest 380a having a certain size are characters, the controller 400 may expand the region of interest 380a to include a region corresponding to at least one character.

For example, when the components of the content in the region of interest 380a having the certain size are characters, the controller 400 may expand the size of the region of interest 380a having the certain size to up/down/left/right directions at the same time, and when at least one character is included in an expanded region of interest 380b, the controller 400 may determine a region corresponding to the at least one character as a region of interest 380c.

In another example, when components of the content in the region of interest 380a having the certain size are characters, the controller 400 may expand the size of the region of interest 380a having the certain size to up, down, left and/or right direction in sequence, and when at least one character is included in the expanded region of interest 380b, the controller 400 may determine a region corresponding to the at least one character as the region of interest 380c.

In an embodiment, when components of the content in the region of interest 380a having the certain size are characters, the controller 400 may expand the region of interest 380a sequentially and expand the region of interest until no additional character is detected in the region of interest.

For example, when components of the content in the region of interest 380a having the certain size are characters, the controller 400 may expand the size of the region of interest 380a having the certain size, and based on an additional character detected in the expanded region of interest 380b, further expand the region of interest to the region 380c where no additional character is detected.

In an embodiment, the controller 400 may expand or reduce the size of the region of interest 320 based on pixel values within a certain distance from a boundary of the region of interest 320. The certain distance may be a distance corresponding to 20% of horizontal and/or vertical length of the region of interest 320 from the boundary of the region of interest 320 and/or a distance set by the user.

The pixel value is a numerical value allocated for each pixel, and refers to a value that represents color or contrast of each pixel. For example, the pixel value may be expressed by a combination of red, green and blue, and a value corresponding to each color may have a value ranging from 0 to 255.

For example, the controller 400 may expand the size of the region of interest to the region 380c within a certain distance from a boundary of the region of interest 380a having the certain size based on a difference between a pixel value in the region of interest 380a having the certain size and a value of a pixel located at a certain distance from the boundary of the region of interest 380a being within a certain difference.

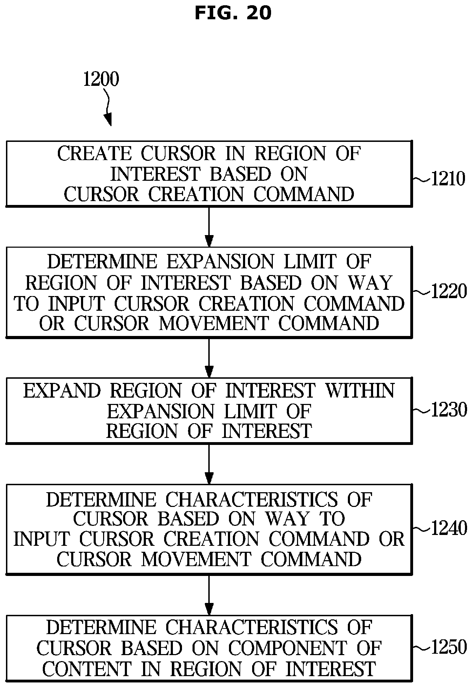

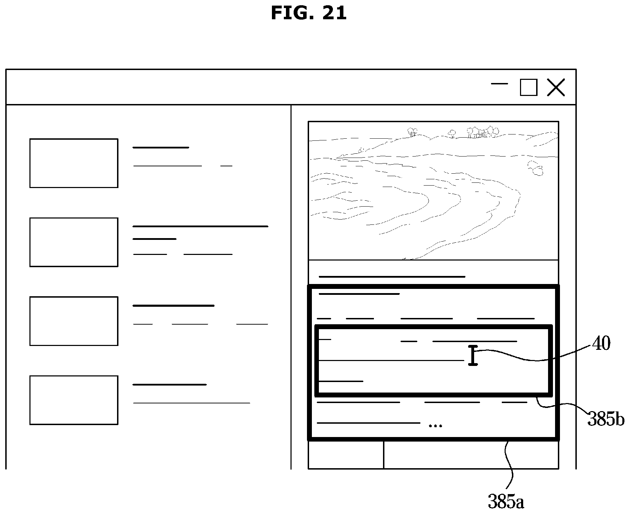

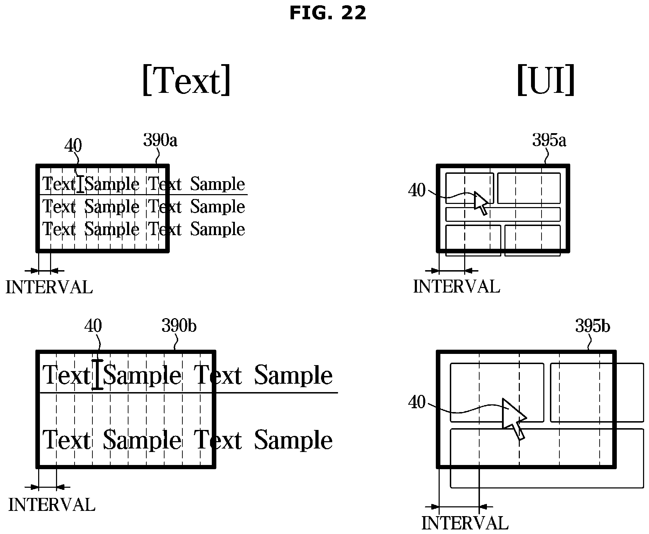

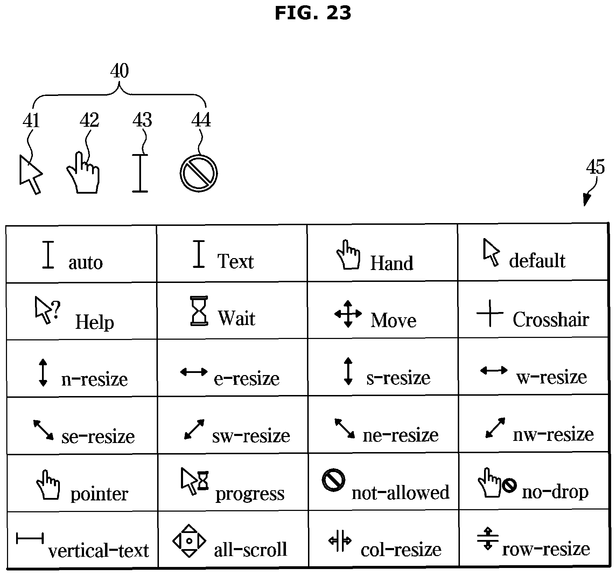

FIG. 20 is a flowchart 1200 for describing an example of a method of determining characteristics of a cursor 40 in the region of interest of FIG. 5, according to an embodiment. FIG. 21 illustrates an example of determining characteristics of a cursor in a region of interest, according to an embodiment. FIG. 22 illustrates an example of determining characteristics of a cursor 40 in a region of interest, according to an embodiment. FIG. 23 illustrates an example of determining characteristics of a cursor 40 in a region of interest, according to an embodiment.

The display apparatus 1 may create a cursor 40 in a region of interest based on a cursor creation command, in 1210.

In various embodiments, the controller 400 may create the cursor 40 in the region of interest 320 based on the cursor creation command received through the communication module 300, the input module 520 and/or the sensor module 200.

In an embodiment, the controller 400 may display the cursor 40 in the region of interest 320 based on the cursor creation command received through the communication module 300.

For example, the user may press a button arranged on a remote controller, and the remote controller may output a control signal corresponding to the cursor creation command based on a certain button being pressed. The certain button corresponding to the cursor creation command may be all and/or some of the buttons arranged on the remote controller. The communication module 300 may receive a control signal output from the remote controller.

In another example, when the communication module 300 receives a control signal output from the remote controller, the controller 400 may display the cursor 40 in the display area 12 based on the control signal output from the remote controller.

In another example, when the communication module 300 receives a control signal output from a user equipment (e.g., a touch pad equipped in a mobile device), the controller 400 may display the cursor in the region of interest 320 based on the control signal output from the user equipment. For example, the user equipment may output a control signal corresponding to a touch input received by the touch pad arranged on the user equipment.

In an embodiment, the controller 400 may display the cursor 40 in the region of interest 320 based on the cursor creation command received through the input module 520.

For example, when the input module 520 is a button equipped on the display apparatus 1, the controller 400 may display the cursor 40 in the region of interest 320 based on a control signal generated when the button equipped on the display apparatus 1 is pressed.

In an embodiment, the controller 400 may display the cursor 40 in the region of interest 320 based on the cursor creation command received through the sensor module 200.

For example, the sensor module 200 may obtain an image of the user, and the controller 400 may display the cursor 40 in the region of interest 320 when detecting a motion (e.g., gesture) of the user based on the image of the user.

In various embodiments, the controller 400 may move the cursor 40 in the region of interest 320 based on a cursor movement command received through the communication module 300, the input module 520 and/or the sensor module 200.

In an embodiment, the controller 400 may move the cursor 40 in the region of interest 320 based on the cursor movement command received through the communication module 300.

For example, the user may press a button arranged on the remote controller, and the remote controller may output a control signal corresponding to the cursor movement command based on a certain button being pressed. The certain button corresponding to the cursor movement command may be a move button arranged on the remote controller. The communication module 300 may receive a control signal output from the remote controller.

In another example, when the communication module 300 receives a control signal output from the remote controller, the controller 400 may move the cursor 40 in the display area 320 based on the control signal output from the remote controller.

In another example, when the communication module 300 receives a control signal output from a user equipment (e.g., a touch pad equipped on a mobile device), the controller 400 may move the cursor 40 in the region of interest 320 based on the control signal output from the user equipment. For example, the user equipment may output a control signal corresponding to a touch input received by the touch pad arranged on the user equipment.

In an embodiment, the controller 400 may move the cursor 40 in the region of interest 320 based on the cursor movement command received through the input module 520.

For example, when the input module 520 is a button equipped on the display apparatus 1, the controller 400 may move the cursor 40 in the region of interest 320 based on a control signal generated when the button equipped on the display apparatus 1 is pressed.

In an embodiment, the controller 400 may move the cursor 40 in the region of interest 320 based on the cursor movement command received through the sensor module 200.

For example, the sensor module 200 may obtain an image of the user, and the controller 400 may move the cursor 40 in the region of interest 320 when detecting a motion (e.g., gesture) of the user based on the image of the user obtained by the sensor module 200.

The display apparatus 1 may determine an expansion limit of the region of interest 320 based on a way to input the cursor creation command or the cursor movement command.

The way to input the cursor creation command or the cursor movement command may be a type of a user input signal transmitted by the communication module 300 and/or the input module 520 and/or a type of the sensor information obtained by the sensor module 200.

For example, the way to input the cursor creation command or the cursor movement command may include pressing a button arranged on the remote controller, touching a touch pad arranged on the user equipment, pressing a button arranged on the display apparatus 1 and/or movement of the user.

The expansion limit of the region of interest may be a size of the region of interest 320 that is expandable to the max based on a ratio of the size of the user equipment to the size of the display apparatus 1.

For example, when the horizontal length of the display apparatus 1 is 1 m and the horizontal length of the user equipment (e.g., touch pad) is 10 cm, the ratio of the size of the user equipment to the size of the display apparatus 1 is 0.1, and the controller 400 may determine the expansion limit of the region of interest 320 to be 10 cm obtained by multiplying the horizontal length of the display apparatus 1, 1m by the ratio of the size of the user equipment to the size of the display apparatus 1.

In another example, to display or move the cursor 40 in the display area 12 based on the sensor information corresponding to a movement (e.g., gesture) of the user, the controller 400 may expand the size of the region of interest 320 to be within the size corresponding to a radius (e.g., horizontal and/or vertical length is 50 cm) to which the user is movable to the max within a certain time.

The display apparatus 1 may expand the region of interest 320 within the expansion limit of the region of interest 320, in 1230.

Referring to FIG. 21, the controller 400 may determine the expansion limit of the region of interest 320 based on the way to input the cursor creation command or the cursor movement command, and expand the region of interest 320 within the determined expansion limit of the region of interest 320.

For example, the controller 400 may determine an expansion limit 385b of the region of interest 320 based on the way to input the cursor creation command or the cursor movement command, and reduce the size of the expanded region of interest 385a to be within the expansion limit 385b of the region of interest 320.

In an embodiment, the controller 400 may display the cursor 40 in the region of interest 385b based on the cursor creation command.

In an embodiment, the controller 400 may not display the cursor 40 in the region of interest 385b when the cursor creation command is not detected in a certain time.

In an embodiment, the controller 400 may move the cursor 40 in the region of interest 385b based on the cursor movement command.

In an embodiment, when the cursor movement command is a command to move out of a region corresponding to the region of interest 385b, the controller 400 may control the cursor 40 to be displayed in the region of interest 385b.

Referring to FIG. 20, the display apparatus 1 may determine characteristics of a cursor 40 based on the way to input the cursor creation command or the cursor movement command, in 1240.

The characteristics of the cursor 40 may include a moving interval of the cursor 40, moving speed of the cursor 40, a shape of the cursor 40 and/or a color of the cursor 40.

The moving interval of the cursor 40 may be a distance the cursor 40 moves based on a single movement command.

For example, when the way to input the cursor movement command is pressing the move button arranged on the remote controller, the controller 400 may move the cursor 40 based on the determined moving interval of the cursor 40 in response to the move button of the remote controller being pressed one time. The cursor 40 may be moved as far as a distance corresponding to as many moving intervals as the number of times of being pressed.

The moving speed of the cursor 40 may be speed at which the cursor 40 is moved based on the user input signal.

For example, when the way to input the cursor movement command is pressing the move button arranged on the remote controller, the controller 400 may move the cursor 40 based on the determined moving speed of the cursor 40 in response to the move button of the remote controller being pressed one time.

The shape of the cursor 40 may be a shape of the cursor 40 displayed in the display area 12.

The size of the cursor 40 may be a size of the cursor 40 displayed in the display area 12.

The color of the cursor 40 may be a color of the cursor 40 displayed in the display area 12.

In an embodiment, the controller 400 may control the moving interval of the cursor 40 based on a way to input the cursor creation command or the cursor movement command.

For example, the moving interval of the cursor 40 when the way to input the cursor creation command or the cursor movement command is touching the touch pad arranged on the user equipment may be controlled to be narrower than when the way to input the cursor creation command or the cursor movement command is pressing the button arranged on the remote controller.

In an embodiment, the controller 400 may determine the moving interval of the cursor 40 based on the expansion limit of the region of interest 320.

For example, the controller 400 may increase the moving interval of the cursor 40 in proportion to the expansion limit of the region of interest 320.

In an embodiment, the controller 400 may control the moving speed of the cursor 40 based on the way to input the cursor creation command or the cursor movement command.

For example, the moving speed of the cursor 40 when the way to input the cursor creation command or the cursor movement command is touching the touch pad arranged on the user equipment may be controlled to be slower than when the way to input the cursor creation command or the cursor movement command is pressing the button arranged on the remote controller.

In an embodiment, the controller 400 may determine the moving speed of the cursor 40 based on the expansion limit of the region of interest 320.

For example, the controller 400 may increase the moving speed of the cursor 40 in proportion to the expansion limit of the region of interest 320.

In an embodiment, the controller 400 may control the size of the cursor 40 based on the way to input the cursor creation command or the cursor movement command.

For example, the size of the cursor 40 when the way to input the cursor creation command or the cursor movement command is touching the touch pad arranged on the user equipment may be controlled to be smaller than when the way to input the cursor creation command or the cursor movement command is pressing the button arranged on the remote controller.

In an embodiment, the controller 400 may determine the size of the cursor 40 based on the expansion limit of the region of interest 320.

For example, the controller 400 may determine the size of the cursor 40 in proportion to the expansion limit of the region of interest 320.

The display apparatus 1 may determine characteristics of the cursor based on the components of content in the region of interest, in 1250.

Referring to FIG. 22, in various embodiments, the controller 400 may determine the moving interval of the cursor 40 based on the size, number and/or spacing of the components of the content in the region of interest, and move the cursor 40 according to the determined moving interval.

In an embodiment, when the type of the components of the content in a region of interest 390a is character, the controller 400 may obtain a size or spacing of the characters, and control the moving interval of the cursor 40 in the region of interest 390a based on the obtained information.

In an embodiment, the controller 400 may control the moving interval of the cursor 40 in the region of interest 320 in proportion to the size of the character and/or the spacing between the characters in the region of interest 320.

For example, the controller 400 may control the moving interval of the cursor 40 in the region of interest 390a having characters in relatively small size or having relatively narrow spacing between the characters to be narrower than the moving interval of the cursor 40 in a region of interest 390b having characters in relatively large size or having relatively wide spacing between the characters.

In an embodiment, the controller 400 may control the moving interval of the cursor 40 in the region of interest 320 in inverse proportion to the number of characters in the region of interest 320.

For example, the controller 400 may determine the moving interval of the cursor 40 in the region of interest 390a having a large number of characters in the region of interest 390a to be narrower than the moving interval of the cursor 40 in a region of interest 390b having a small number of characters in the region of interest 390b.

In an embodiment, when the type of components of content in a region of interest 395a is the image and/or video, the controller 400 may obtain information about the size or spacing of the images and/or videos, and based on the obtained information, control the moving interval of the cursor 40 in the region of interest 395a.

In an embodiment, the controller 400 may control the moving interval of the cursor 40 in the region of interest 320 in proportion to the size of the image and/or video and/or the spacing between the images and/or the videos.

For example, the controller 400 may control the moving interval of the cursor 40 in the region of interest 395a having the image and/or video in a relatively small size or having relatively narrow spacing between the images and/or videos to be narrower than the moving interval of the cursor 40 in a region of interest 395b having the image and/or video in a relatively large size or having relatively wide spacing between the images and/or videos.

In an embodiment, the controller 400 may control the moving interval of the cursor 40 in the region of interest 320 in inverse proportion to the number of images and/or videos in the region of interest 320.

For example, the controller 400 may determine the moving interval of the cursor 40 in the region of interest 395a having a large number of images and/or videos in the region of interest 395a to be narrower than the moving interval of the cursor 40 in a region of interest 395b having a small number of images and/or videos in the region of interest 395b.

In various embodiments, the controller 400 may determine the moving speed of the cursor 40 based on the size, number and/or spacing of the components of the content in the region of interest, and move the cursor 40 according to the determined moving speed.

In an embodiment, when the type of the components of the content in the region of interest 390a is text, the controller 400 may obtain information about the size or spacing of the characters, and control the moving speed of the cursor 40 in the region of interest 390a based on the obtained information.

In an embodiment, the controller 400 may control the moving speed of the cursor 40 in the region of interest 320 in proportion to the size of the character and/or the spacing between the characters in the region of interest 320.

For example, the controller 400 may control the moving speed of the cursor 40 in the region of interest 390a having characters in a relatively small size or having relatively narrow spacing between the characters to be lower than the moving speed of the cursor 40 in the region of interest 390b having characters in a relatively large size or having relatively wide spacing between the characters.

In an embodiment, the controller 400 may control the moving speed of the cursor 40 in the region of interest 320 in inverse proportion to the number of characters in the region of interest 320.

For example, the controller 400 may control the moving speed of the cursor 40 in the region of interest 390a having a large number of characters in the region of interest 390a to be lower than the moving speed of the cursor 40 in a region of interest 390b having a small number of characters in the region of interest 390b.

In an embodiment, when the type of components of content in a region of interest 395a is the image and/or video, the controller 400 may obtain information about the size or spacing of the images and/or videos, and based on the obtained information, control the moving speed of the cursor 40 in the region of interest 395a.

In an embodiment, the controller 400 may control the moving speed of the cursor 40 in the region of interest 320 in proportion to the size of the image and/or video and/or the spacing between the images and/or the videos.

For example, the controller 400 may control the moving speed of the cursor 40 in the region of interest 395a having images and/or videos in a relatively small size or having relatively narrow spacing between the images and/or videos to be lower than the moving speed of the cursor 40 in the region of interest 395b having images and/or videos in a relatively large size or having relatively wide spacing between the images and/or videos.

In an embodiment, the controller 400 may control the moving speed of the cursor 40 in the region of interest 320 in inverse proportion to the number of images and/or videos in the region of interest 320.

For example, the controller 400 may control the moving speed of the cursor 40 in the region of interest 395a having a large number of images and/or videos in the region of interest 395a to be lower than the moving speed of the cursor 40 in the region of interest 395b having a small number of images and/or videos in the region of interest 395b.

In an embodiment, the controller 400 may control the moving speed of the cursor 40 in the region of interest 320 based on moving speed set by the user.

In various embodiments, the controller 400 may determine the size of the cursor 40 based on the size, number and/or spacing of the components of the content in the region of interest.

In an embodiment, when the type of the components of the content in the region of interest 390a is text, the controller 400 may obtain information about the size or spacing of characters, and control the size of the cursor 40 in the region of interest 390a based on the obtained information.

In an embodiment, the controller 400 may control the size of the cursor 40 in the region of interest 320 in proportion to the size of the character and/or the spacing between the characters in the region of interest 320.

For example, the controller 400 may control the size of the cursor 40 in the region of interest 390a having characters in a relatively small size or having relatively narrow spacing between the characters to be smaller than the size of the cursor 40 in the region of interest 390b having characters in a relatively large size or having relatively wide spacing between the characters.

In an embodiment, the controller 400 may control the size of the cursor 40 in the region of interest 320 in inverse proportion to the number of characters in the region of interest 320.

For example, the controller 400 may control the size of the cursor 40 in the region of interest 390a having a large number of characters in the region of interest 390a to be smaller than the size of the cursor 40 in the region of interest 390b having a small number of characters in the region of interest 390b.

In an embodiment, when the type of components of content in the region of interest 395a is the image and/or video, the controller 400 may obtain information about the size or spacing of the images and/or videos, and based on the obtained information, control the size of the cursor 40 in the region of interest 395a.

In an embodiment, the controller 400 may control the size of the cursor 40 in the region of interest 320 in proportion to the size of the image and/or video and/or the spacing between the images and/or the videos in the region of interest 320.

For example, the controller 400 may control the size of the cursor 40 in the region of interest 395a having images and/or videos in a relatively small size or having relatively narrow spacing between the images and/or videos to be smaller than the size of the cursor 40 in the region of interest 395b having images and/or videos in a relatively large size or having relatively wide spacing between the images and/or videos.

In an embodiment, the controller 400 may control the size of the cursor 40 in the region of interest 320 in inverse proportion to the number of images and/or videos in the region of interest 320.

For example, the controller 400 may control the size of the cursor 40 in the region of interest 395a having a large number of images and/or videos in the region of interest 395a to be smaller than the size of the cursor 40 in the region of interest 395b having a small number of images and/or videos in the region of interest 395b.

In an embodiment, the controller 400 may move the cursor 40 to correspond to a selectable element (e.g., a GUI, a hyperlink, etc.) in the region of interest 320.

For example, when text, at least one image, at least one video, at least one GUI and/or at least one hyperlink are displayed in the region of interest 320, the controller 400 may move the cursor 40 to a location corresponding to the at least one GUI and/or a location corresponding to the at least one hyperlink.

In an embodiment, the controller 400 may store information about the location of the cursor 40 in the display area 12, and determine the region of interest 320 based on the stored location of the cursor 40.

For example, the controller 400 may determine the region of interest 320 to be a region including an area where the cursor 40 is last located in the display area 12 when the display apparatus 1 is turned on.

Referring to FIG. 20, the controller 400 may determine characteristics of the cursor 40 based on the way to input the cursor creation command or the cursor movement command and/or components of the content in the region of interest 320.

FIG. 23 illustrates an example of determining characteristics of a cursor in a region of interest, according to an embodiment.

In an embodiment, a shape of the cursor 40 may be determined based on a type of components of content in the region of interest.

For example, when the content in the region of interest 320 is not displayed, the controller 400 may determine the shape of the cursor 40 to be a first shape 41.

In another example, the controller 400 may determine the shape of the cursor 40 to be a second shape 42 based on the components of the content in the region of interest 320 being GUIs.

In another example, when the content in the region of interest 320 is not displayed, the controller 400 may determine the shape of the cursor 40 to be the first shape 41.

In another example, the controller 400 may determine the shape of the cursor 40 to be a third shape 43 based on the components of the content in the region of interest being characters.

In another example, the controller 400 may determine the shape of the cursor 40 to be a fourth shape 44 based on the components of the content in the region of interest 320 being non-selectable images and/or videos.

In an embodiment, the controller 400 may determine a shape of the cursor 40 based on the cursor movement command.

For example, when the cursor movement command is a command to adjust the size of an image in the region of interest 320, the controller 400 may determine the shape of the cursor 40 to be a resized shape 45.

In an embodiment, the controller 400 may control color of the cursor 40 based on a color set by the user. The color of the cursor 40 may include achromatic color and/or chromatic color.

According to the disclosure, a region of interest may be determined for a purpose of a user.

According to the disclosure, the size of the region of interest may be controlled to correspond to the content.

Moreover, according to the disclosure, movement of the cursor may be controlled based on the size, number, spacing and/or type of the contents in the region of interest.

According to the disclosure, the region of interest may be efficiently set up to serve the purpose of the user.

According to the disclosure, a display apparatus may include a display area in which an image is displayed; and a controller for determining a region of interest in the display area and controlling a size of the region of interest based on components of content displayed in the region of interest.

The controller may determine the region of interest based on at least one of a layout of the image, a behavior pattern of a user, a user database or user's view information.

The controller may redetermine the region of interest in the display area based on a location of a region corresponding to a user's view in the display area being out of the region of interest.

The controller may control a size of the region of interest based on at least one of a size, number or spacing of the components of the content.

The controller may control the size of the region of interest based on a type of the components of the content.

The controller may expand or reduce the region of interest to a region having a first type of components of the content based on the type of the components of the content being identified as the first type.

The controller may create a cursor in the region of interest based on a cursor creation command, and move the cursor based on a cursor movement command.

The controller may determine an expansion limit of the region of interest based on a way to input the cursor creation command or the cursor movement command, and expand the region of interest within the expansion limit.

The controller may determine characteristics of the cursor based on the way to input the cursor creation command or cursor movement command.

The controller may determine characteristics of the cursor based on the components of the content.

According to the disclosure, a method of controlling a display apparatus may include determining a region of interest in a display area in which an image is displayed and controlling a size of the region of interest based on components of content displayed in the region of interest.

The determining of the region of interest in the display area in which the image is displayed may include determining the region of interest based on at least one of a layout of the image, a behavior pattern of a user, a user database or user's view information.

The determining of the region of interest in the display area in which the image is displayed may include redetermining the region of interest in the display area based on a location of a region corresponding to a user's view in the display area being out of the region of interest.

The controlling of the size of the region of interest may include controlling the size of the region of interest based on at least one of a size, number or spacing of the components of the content.

The controlling of the size of the region of interest may include controlling the size of the region of interest based on a type of the components of the content.

The controlling of the size of the region of interest based on the type of the components of the content may include expanding or reducing the region of interest to a region having a first type of components of the content based on the type of the components of the content being identified as the first type.

The method of controlling the display apparatus may further include creating a cursor in the region of interest based on a cursor creation command and moving the cursor based on a cursor movement command.

The controlling of the size of the region of interest may include determining an expansion limit of the region of interest based on a way to input the cursor creation command or the cursor movement command; and expanding the region of interest within the expansion limit.

The method of controlling the display apparatus may further include determining characteristics of the cursor based on the way to input the cursor creation command or cursor movement command.

The method of controlling the display apparatus may further include determining characteristics of the cursor based on the components of the content.

Meanwhile, the embodiments of the disclosure may be implemented in the form of a recording medium for storing instructions to be carried out by a computer. The instructions may be stored in the form of program codes, and when executed by a processor, may generate program modules to perform operations in the embodiments of the disclosure. The recording media may correspond to computer-readable recording media.

The computer-readable recording medium includes any type of recording medium having data stored thereon that may be thereafter read by a computer. For example, it may be a read only memory (ROM), a random access memory (RAM), a magnetic tape, a magnetic disk, a flash memory, an optical data storage device, etc.

The computer-readable storage medium may be provided in the form of a non-transitory storage medium. The term 'non-transitory storage medium' may mean a tangible device without including a signal, e.g., electromagnetic waves, and may not distinguish between storing data in the storage medium semi-permanently and temporarily. For example, the non-transitory storage medium may include a buffer that temporarily stores data.

In an embodiment of the disclosure, the aforementioned method according to the various embodiments of the disclosure may be provided in a computer program product. The computer program product may be a commercial product that may be traded between a seller and a buyer. The computer program product may be distributed in the form of a recording medium (e.g., a compact disc read only memory (CD-ROM)), through an application store (e.g., play store^{™}), directly between two user devices (e.g., smart phones), or online (e.g., downloaded or uploaded). In the case of online distribution, at least part of the computer program product (e.g., a downloadable app) may be at least temporarily stored or arbitrarily created in a recording medium that may be readable to a device such as a server of the manufacturer, a server of the application store, or a relay server.

The embodiments of the disclosure have thus far been described with reference to accompanying drawings. It will be obvious to those of ordinary skill in the art that the disclosure may be practiced in other forms than the embodiments of the disclosure as described above without changing the technical idea or essential features of the disclosure. The above embodiments of the disclosure are only by way of example, and should not be construed in a limited sense.

## Claims

1. A display apparatus comprising:
a display area in which an image is displayed; and
a controller configured to determine a region of interest in the display area and control a size of the region of interest based on components of content displayed in the region of interest.

2. The display apparatus of claim 1, wherein the controller is configured to determine the region of interest based on at least one of a layout of the image, a behavior pattern of a user, a user database or user's view information.

3. The display apparatus of claim 1, wherein the controller is configured to redetermine the region of interest in the display area based on a location of a region corresponding to a user's view in the display area being out of the region of interest.

4. The display apparatus of claim 1, wherein the controller is configured to control the size of the region of interest based on at least one of a size, number or spacing of the components of the content.

5. The display apparatus of claim 1, wherein the controller is configured to control the size of the region of interest based on a type of the components of the content.

6. The display apparatus of claim 5, wherein the controller is configured to expand or reduce the region of interest to a region having a first type of components of the content based on the type of the components of the content being identified as the first type.

7. The display apparatus of claim 1, wherein the controller is configured to create a cursor in the region of interest based on a cursor creation command, and
move the cursor based on a cursor movement command.

8. The display apparatus of claim 7, wherein the controller is configured to determine an expansion limit of the region of interest based on a way to input the cursor creation command or the cursor movement command, and expand the region of interest within the expansion limit.

9. The display apparatus of claim 7, wherein the controller is configured to determine characteristics of the cursor based on the way to input the cursor creation command or cursor movement command.

10. The display apparatus of claim 7, wherein the controller is configured to determine characteristics of the cursor based on the components of the content.

11. A method of controlling a display apparatus, the method comprising:
determining a region of interest in a display area in which an image is displayed; and
controlling a size of the region of interest based on components of content displayed in the region of interest.

12. The method of claim 11, wherein the determining of the region of interest in the display area in which the image is displayed comprises determining the region of interest based on at least one of a layout of the image, a behavior pattern of a user, a user database or user's view information.

13. The method of claim 11, wherein the determining of the region of interest in the display area in which the image is displayed comprises redetermining the region of interest in the display area based on a location of a region corresponding to a user's view in the display area being out of the region of interest.

14. The method of claim 11, wherein the controlling of the size of the region of interest comprises controlling the size of the region of interest based on at least one of a size, number or spacing of the components of the content.

15. The method of claim 11, wherein the controlling of the size of the region of interest comprises controlling the size of the region of interest based on a type of the components of the content.
